# EUROPEAN PATENT APPLICATION

(11) **EP 3 742 013 A1**
(43) Date of publication of application: **25.11.2020**
(21) Application number: 19175443.1
(22) Date of filing: 20.05.2019
(51) Int. Cl.: F16C 41/00, F16C 33/20, F16C 33/28

(54) **ELECTRICALLY CONDUCTIVE AND SELF-LUBRICATING BEARING LINER, BEARING CONTAINING THE SAME, AND METHOD OF MANUFACTURING SUCH A BEARING LINER**

(71) Applicant: Aktiebolaget SKF, 41 550 Göteborg (SE)
(72) Inventor: Colton, Michael Brett, Bristol, BS70HQ (GB); Bell, Andrew, Newton Abbot, Devon, TQ12 1GN (GB)
(74) Representative: Schonecke, Mitja

(57) **Abstract**

The invention relates to a bearing liner (4) comprising a first fabric (9) having a fibre sheet (11) pre-impregnated with a binder (12), and a second fabric (10) impregnated with said binder (12), and having a bearing element contact surface (13) with lubricating fibres (14), and structural fibres (15) supporting the bearing element contact surface (13). The said fibre sheet (11) and binder (12) incorporate conductive fillers.

## Description

### TECHNICAL FIELD OF THE INVENTION

The present invention relates generally to the field of bearings, and in particular to an improved bearing liner and a bearing containing the same. The bearing liner has a low rate of wear in use, is electrically conductive, and may be used in a number of applications, for example aerospace applications.

### BACKGROUND OF THE INVENTION

Bearings are devices that permit constrained relative motion between two parts. A plain bearing is the simplest type of bearing, comprising just a bearing surface and no rolling elements. Therefore the journal, i.e. the part of the shaft in contact with the bearing, slides over the bearing surface. The simplest example of a plain bearing is a shaft rotating in a hole. Two-piece plain bearings, known as full bearings in industrial machinery, are commonly used for larger diameters, such as crankshaft bearings. Self-lubricating plain bearings have a lubricant contained within the bearing walls. The lubricant is typically an integral element of the bearing material and remains part of the bearing's makeup for its useful life without the need of outside maintenance.

Plain bearings often contain a liner between the bearing surfaces to reduce friction. Typical prior art fabric liners used in self-lubricating bearings comprise a woven fabric combined with a binder to form composite material that can be affixed to bearing surfaces. The fabric component of the composite consists of a top surface of lubricating yarns (typically PTFE fibres) which degrade through motion at the working surface and provide the bearing with lubricant, and structural yarns (typically glass fibers) which help retain the lubricating yarns and provide the composite with its structural integrity.

Examples of bearing liners and their manufacturing processes are described in EP-A1-2 955 400. Fabric liners are laminated with a fibre sheet pre-impregnated with a resin binder. The resulting laminate is then compressed at an elevated temperature so that the binder bled though to impregnate the fabric.

It could be a great interest to improve such composite bearing liner enabling a wider use of plain bearings containing the same.

### SUMMARY OF THE INVENTION

The present invention provides a bearing liner comprising a first fabric having a fibre sheet pre-impregnated with a binder. The bearing liner further comprises a second fabric impregnated with said binder, and having a bearing element contact surface with lubricating fibres, and structural fibres supporting the bearing element contact surface.

According to the invention, the said fibre sheet and binder incorporate conductive fillers.

Thanks to the invention, the bearing liner is electrically conductive. Conductive fillers of fibre sheet are impregnated with a binder that also comprises conductive fillers. The electric current can pass through the liner. In some applications, for example aircraft landing gears, it is not necessary to provide additional electrically conductive paths. The invention permits to reduce the number of parts in certain applications, and then inducing cost and manufacturing saves, and can be used in particular applications requiring electrically conductive parts.

The electrically conductive bearing liner is also self-lubricating to increase the working lifetime of a bearing.

According to further aspects of the invention which are advantageous but not compulsory, such a bearing liner may incorporate one or several of the following features:
- Conductive fillers comprise graphite fillers and/or carbon fillers and/or metallic fillers such as copper or silver.
- The binder comprises at least 2 wt.% of graphite fillers.
- The binder comprises a resin, preferably a phenolic resin.
- The lubricating fibres comprise PTFE.
- The structural fibres comprise from 10 to 30 wt.% glass and/or carbon and/or polyester and/or aramid, and from 70 to 90 wt.% PTFE.

In a further aspect, the invention also provides a bearing comprising an inner ring, an outer ring, and a bearing liner herein disposed therebetween and according to any of the preceding embodiments.

According to further aspects of the invention which are advantageous but not compulsory, such a bearing may incorporate one or several of the following features:
- The bearing liner is fixed to an inner surface of outer ring, the bearing element surface being in contact with an outer surface of inner ring.
- The bearing liner is fixed to an outer surface of inner ring, the bearing element surface being in contact with an inner surface of outer ring.
- The inner ring has a convex outer surface, and the outer ring has a concave inner surface.
- The outer ring has a convex inner surface, and the inner ring has a concave outer surface.
- At least one of the rings is formed of a bearing steel, for example AMS 5630 or AMS 5643.
- The inner ring is a rotating journal.
- The outer ring is a fixed housing.
- The bearing is a plain bearing.

In a further aspect, the invention provides a method of manufacturing a bearing liner according to any of the preceding embodiments, the method comprising the steps of:
(a) Providing a first fabric comprising a fiber sheet pre-impregnated with a binder, said fiber sheet and binder incorporating conductive fillers,
(b) Providing a second fabric comprising a bearing element contact surface with lubricating fibres, and structural fibres supporting the bearing element contact surface, and
(c) Contacting and compressing together the first and second fabrics at an elevated temperature such as at least some of the binder in the first fabric transfers to the second fabric and impregnates said second fabric.

In the contacting and compressing step, the binder-impregnated and electrically conductive first fabric is advantageously pressed against the side of second fabric with structural fibres, i.e. the side opposite the bearing element surface.

The method permits to combine both fabrics to form an integral bearing liner. The electrically conductive binder of first fabric impregnates the second fabric with self-lubricating and structural fibres. The second fabric is then electrically conductive.

The compressing is carried out at an elevated temperature, for example 160-180°C. The temperature used will depend on the nature of binder material. The elevated temperature facilitates the amount of binder that is transferred to, and impregnates, the second fabric. The first and/or second fabric(s) is/are typically woven.

### BRIEF DESCRIPTION OF THE DRAWINGS

The invention will now be explained in correspondence with the annexed figures, as illustrative example, without restricting the object of the invention. In the annexed figures:
- Figure 1 is a half-axial section of a bearing comprising a bearing liner according to the invention; and
- Figure 2 is a schematic bearing liner according to the invention.

### DETAILED DESCRIPTION OF SOME EMBODIMENTS

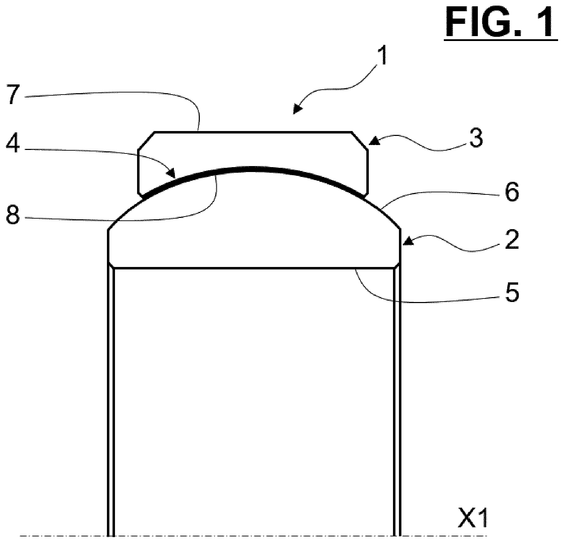

Referring to Figure 1, a bearing 1 of main axis X1 comprises an inner ring 2, an outer ring 3, and a bearing liner 4 disposed therebetween.

The inner ring 2 comprises a cylindrical bore 5, and a convex outer surface 6 of spherical shape. The inner ring is advantageously formed of a bearing steel, for example AMS5630.

The outer ring 3 is concentrically positioned with respect to inner ring 2. Outer ring 3 comprises a cylindrical outer surface 7, and a concave inner surface 8 of spherical shape. Inner surface 8 and outer surface 6 of outer ring 3 and inner ring 2, respectively, are of corresponding shapes to permit a relative motion between them.

The inner ring 2 may be a movable ring, and the outer ring 3 may be a stationary ring. Alternatively, the inner ring 2 may be a stationary ring, and the outer ring 3 may be a movable ring.

Alternatively, the inner ring 2 may consist in a journal. Alternatively, the outer ring 3 may consist in a stationary housing.

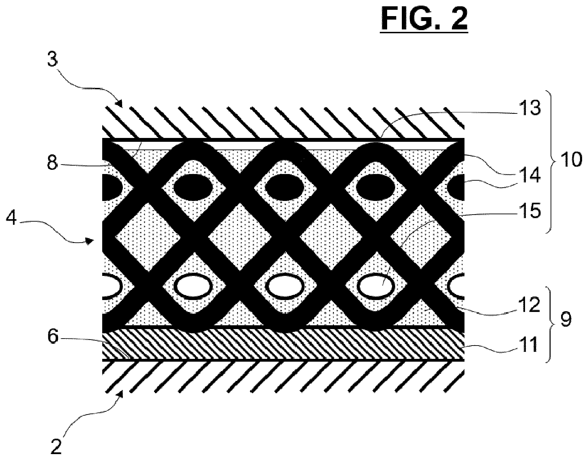

The bearing liner 4 is radially interposed between the inner surface 8 of outer ring 3 and the outer surface 6 of inner ring 2. The bearing liner 4 is further detailed in Figure 2.

The bearing liner 4 comprises a first fabric 9, and a second fabric 10.

First fabric 9 has a fibre sheet 11 pre-impregnated with a binder 12. Advantageously, the binder 12 comprises a resin, and preferably a phenolic resin.

Second fabric 10 has a bearing element contact surface 13 with lubricating fibres 14, and structural fibres 15 supporting the said bearing element contact surface 13. Advantageously, the lubricating fibres comprise PTFE. Advantageously, the structural fibres comprise from 10 to 30 wt.% glass and/or carbon and/or polyester and/or aramid, and from 70 to 90 wt.% PTFE. Second fabric 10 is impregnated with binder 12 of first fabric 9.

In the embodiment of Figure 2, the bearing liner 4 is fixed to the outer surface 6 of inner ring 2, the bearing element contact surface 13 being in sliding contact with the inner surface 8 of outer ring 3. Alternatively, the bearing liner 4 may be fixed to the inner surface 8 of outer ring 3, the bearing element contact surface 13 being in sliding contact with the outer surface 6 of inner ring 2.

Such a self-lubricated bearing liner 4 permits a reduced wear rate during the service life of a bearing 1.

According to the invention, the said fibre sheet 11 and binder 12 incorporate conductive fillers.

First fabric 9 is then electrically conductive. The resin binder 12 of first fabric 9 also impregnates the second fabric 10, and then said second fabric 10 is also electrically conductive.

Conductive fillers comprise graphite fillers and/or metallic fillers such as copper or silver. Advantageously, the binder comprises at least 2 wt.% of graphite fillers to ensure efficient electrical conductivity.

The bearing liner 4 permits the current to pass. The bearing 1 is then electrically conductive between the inner and outer rings 2, 3 through the outer and inner surfaces 6, 8, respectively, and the bearing liner 4.

A method of manufacturing such a self-lubricated and electrically conductive bearing liner 4 comprises the step of providing the first fabric 9 comprising a fiber sheet 11 pre-impregnated with a binder 12, said fiber sheet 11 and binder 12 incorporating conductive fillers.

Then the method comprises the step of providing the second fabric 10 comprising a bearing element contact surface 13 with lubricating fibres 14, and structural fibres 15 supporting the bearing element contact surface.

The method comprises the final step of contacting and compressing together the first and second fabrics 9, 10 at an elevated temperature such as at least some of the binder 12 in the first fabric 9 transfers to the second fabric 10 and impregnates said second fabric 10.

In the contacting and compressing step, the binder-impregnated and electrically conductive first fabric 9 is advantageously pressed against the side of second fabric 10 with structural fibres 15, i.e. the side opposite the bearing element surface 13.

The compressing is carried out at an elevated temperature, for example 160-180°C, to facilitate the amount of binder 12 that is transferred to, and impregnates, the second fabric 10.

The bearing 1 illustrated in Figure 1 is a plain bearing. Advantageously, the bearing 1 is suitable for aerospace applications. Aerospace bearings operate under particularly arduous conditions, and may therefore fail relatively rapidly. As a result, aircraft maintenance guidelines enforce frequent inspection intervals. Advantageously, in view of the low wear rate of the bearing liner 4 according to the present invention, the mean time between replacement of the aerospace bearing 1 may be increased.

Representative, non-limiting examples of the present invention were described above in details with reference to the attached drawings. This detailed description is merely intended to teach a person of skill in the art further details for practicing preferred aspects of the present teachings and is not intended to limit the scope of the invention. Furthermore, each of the additional features and teachings disclosed above may be utilized separately or in conjunction with other features and teachings to provide improved bearing liner and bearing.

Moreover, various features of the above-described representative examples, as well as the various independent and dependant claims below, may be combined in ways that are not specifically and explicitly enumerated in order to provide additional useful embodiments of the present teachings.

## Claims

1. Bearing liner (4) comprising:
- a first fabric (9) having a fibre sheet (11) pre-impregnated with a binder (12), and
- a second fabric (10) impregnated with said binder (12), and having a bearing element contact surface (13) with lubricating fibres (14), and structural fibres (15) supporting the bearing element contact surface (13),
**characterized in that** the said fibre sheet (11) and binder (12) incorporate conductive fillers.

2. Bearing liner according to claim 1, wherein conductive fillers comprise graphite fillers and/or metallic fillers and/or carbon fillers.

3. Bearing liner according to claim 2, wherein the binder (12) comprises at least 2 wt.% of graphite fillers.

4. Bearing liner according to any of the preceding claims, wherein the binder (12) comprises a resin.

5. Bearing liner according to any of the preceding claims, wherein the lubricating fibres (14) comprise PTFE.

6. Bearing liner according to any of the preceding claims, wherein the structural fibres (15) comprise from 10 to 30 wt.% glass and/or carbon and/or polyester and/or aramid, and from 70 to 90 wt.% PTFE.

7. Bearing comprising an inner ring (2), an outer ring (3), and a bearing liner (4) herein disposed therebetween and according to any of the preceding claims.

8. Method of manufacturing a bearing liner (4) according to any of the claims 1 to 6, and comprising the steps of:
(a) Providing the first fabric (9) comprising a fiber sheet (11) pre-impregnated with a binder (12), said fiber sheet (11) and binder (12) incorporating conductive fillers,
(b) Providing the second fabric (10) comprising a bearing element contact surface (13) with lubricating fibres (14), and structural fibres (15) supporting the bearing element contact surface (13), and
(c) Contacting and compressing together the first and second fabrics (9, 10) at an elevated temperature such as at least some of the binder (12) in the first fabric (9) transfers to the second fabric (10) and impregnates said second fabric (10).
